# EUROPÄISCHE PATENTANMELDUNG

(11) **EP 0 673 760 A1**
(43) Veröffentlichungstag der Anmeldung: **27.09.1995**
(21) Anmeldenummer: 95103940.3
(22) Anmeldetag: 17.03.1995
(51) Int. Cl.: B32B 27/30

(54) **Vollständig recyclierbarer Verbundkörper, insbesondere zur Herstellung von Möbelplatten**

(30) Priorität: 22.03.1994 DE 9404844 U
(71) Anmelder: Degussa Aktiengesellschaft, D-60311 Frankfurt (DE)
(72) Erfinder: Oberländer, Klaus, D-63457 Hanau (DE); Brand, Norbert, Dr., D-64291 Darmstadt (DE); Gütlbauer, Franz, Dr., A-2500 Baden (AT); Molnar, Gerald, A-2440 Gramatneusiedl (AT)

(57) **Zusammenfassung**

Ein vollständig recyclierbarer Verbundkörper, insbesondere für Möbelplatten, mit einem Kern (1,5) aus wenigstens einem ersten Material, der von einer Hülle (4,6,7) aus wenigstens einem zweiten Material umgeben ist, wobei der Kern (1,5) spezifisch leichter ist als die Hülle (4,6,7) und der sich dadurch kennzeichnet, daß die Hülle (4,6,7) und der Kern (1,5) aus Acrylglas sind und, daß der Kern (1,5) unter den Depolymerisationsbedingungen des Acrylglases der Hülle (4,6,7) dasselbe Monomer wie die Hülle (4,6,7) oder ein vom Monomer der Hülle (4,6,7) destillativ abtrennbares Monomeres freisetzt, ist vollständig recyclierbar, leichter als eine massive Acrylglasplatte und besitzt die hohe Oberflächengüte und den Glanz des Acrylglases, woraus Türen, Platten, Frontpartien oder Arbeitsflächen von Möbeln, insbesondere Küchenmöbeln hergestellt werden.

## Beschreibung

Die Neuerung betrifft vollständig recyclierbare Verbundkörper, insbesondere für Möbelplatten, mit einem Kern aus wenigstens einem ersten Material, der von einer Hülle aus wenigstens einem zweiten Material umgeben ist, wobei der Kern spezifisch leichter ist als die Hülle.

Nach Verbundkörpern, wie sie Gegenstand der vorliegenden Neuerung sind, besteht insbesondere in der Möbelindustrie ein gesteigerter Bedarf, weil solche Verbundkörper beispielsweise sehr leicht in die Form von Türen, Platten, Frontpartien oder Arbeitsflächen zu bringen sind und daher die einfache Fertigung von Möbeln, insbesondere Küchenmöbeln, gestatten.

Standardmäßig wird heute im Küchenbereich die beschichtete MDF-Platte (d.h. mitteldichte Faserplatte) eingesetzt. Die MDF-Platte besteht in der Regel aus Lignozellulosefasern und einem synthetischen Bindemittel und hat den Vorteil, daß sie eine hohe Stabilität mit einer relativ leichten Verarbeitbarkeit verbindet. Wird jedoch z. B. eine Sichtseite mit hochglänzender Oberfläche gewünscht, so muß die MDF-Platte entweder hochglanzlackiert oder mit einem hochglänzenden Furnier beklebt werden. Andere Dekore und Oberflächen-Strukturen werden durch Aufbringen von bedruckten und/oder geprägten Folien, meist aus PVC, oder durch hochdrucklaminierte Papiere erzeugt.

Der Kern der MDF-Platte ist dann zwar relativ dauerhaft und die Oberfläche kann auch kratzfest vergütet sein, die hierzu benötigten Materialien erschweren jedoch das Recycling der Verbundkörper erheblich, ja machen es ohne vorherige Trennung der Bestandteile annähernd unmöglich. Die sortenreine Trennung wiederum ist mit zu hohen Kosten verbunden und daher nicht praktikabel.

Ein Werkstoff, der bekanntermaßen sowohl Oberflächen von höchstem Glanz als auch eine hundert prozentige Recyclierbarkeit miteinander verbindet ist gegossenes oder extrudiertes Acrylglas. Es hat nun schon Versuche gegeben, sich bei der Schaffung von Möbelfronten, die dem Anforderungsprofil : "Hochglanzoberfläche und vollständig recyclierbar" genügen, dieses Werkstoffs zu bedienen, die Akzeptanz am Markt war bislang allerdings eher gering. Massives Acrylglas kann zwar sowohl die Forderungen nach Gefälligkeit und Hochglanzoberfläche als auch nach vollständiger Wiederverwertbarkeit ohne den gefürchteten Effekt des "Downcycling" befriedigen, ist jedoch in massiver Ausführung sehr schwer und teuer und damit bislang nur für Musterstücke, nicht aber für eine Produktion von Teilen für die Möbelindustrie, insbesondere Möbelfronten, in größeren Mengen geeignet.

Aufgabe der Neuerung ist es daher, einen Verbundkörper der eingangs erwähnten Gattung anzugeben, der einfach und preisgünstig gefertigt werden kann, der u. a. eine hohen Oberflächenglanz ermöglicht, vollständig recyclierbar ist und gleichzeitig eine deutliche Reduzierung des Gewichts gegenüber massivem Acrylglas ohne wesentlichen Stabilitätsverlust ermöglicht.

Gelöst werden diese und weitere nicht im einzelnen angeführte Aufgaben durch einen Verbundkörper mit den Merkmalen des kennzeichnenden Teils des Anspruchs 1.

Vorteilhafte und bevorzugte Ausführungsformen werden in den davon abhängigen Ansprüchen unter Schutz gestellt.

Insbesondere dadurch, daß der neuerungsgemäße Verbundkörper bei spezifisch leichterem Kern eine Hülle und einen Kern aus Acrylglas aufweist, wobei der Kern unter den Depolymerisationsbedingungen vom Acrylglas der Hülle dasselbe Monomer freisetzt wie die Hülle oder ein vom Monomer, das vom Acrylglas der Hülle freigesetzt wird, destillativ abtrennbares Monomer, gelingt es die Nachteile von massivem Acrylglas zu überwinden und gleichzeitig die hundertprozentige Recyclierbarkeit des Verbundkörpers zu gewährleisten, und zwar ohne vorherige aufwendige Trenn- oder Reinigungsoperationen vor dem Recycling.

Im Rahmen der Neuerung ist es grundsätzlich wichtig, daß der Kern zur Gewichtsersparnis des Verbundkörpers beiträgt, während die Hülle aus Acrylglas den hohen Glanz oder ein beliebiges Dekor zum gefälligen Erscheinungsbild des Verbundkörpers liefern kann.

Ein Verbundkörper im neuerungsgemäßen Sinne kann dabei jede beliebige Form aufweisen, sofern gewährleistet ist, daß der Kern allseitig und im wesentlichen vollständig von der Hülle umgeben ist. Allerdings kann es im Rahmen der Neuerung bei bestimmten Anwendungen durchaus vorteilhaft sein, wenn der Kern nur teilweise, aber doch zum überwiegenden Teil, von der Hülle umgeben ist. So ist es gemäß der Neuerung auch vorstellbar, daß bei Verwendung des Verbundkörpers als Küchencorpus z. B. nur die sichtbaren Flächen vom Acrylglasmantel bedeckt sind, Stoßstellen oder verdeckte Flächen oder Kanten jedoch, unbedeckt bleiben. Dies ist aus Gründen der Kosten- und Materialersparnis infolge des geringeren Fertigungsaufwandes in bestimmten Fällen durchaus bevorzugt.

Der Begriff Verbundkörper beinhaltet neuerungsgemäß nicht, daß zwischen Kern und Hülle eine Verbindung aufgrund chemischer Wechselwirkungen zwischen Kern- und Hüllenmaterial(ien) bestehen muß. Diese chemische Verbindung kann bestehen, i. d. R. ist aber, beispielsweise in einer Schnittansicht, eine deutliche makroskopisch erkennbare Grenzfläche zwischen Kern und Hülle vorhanden. Bevorzugt ist ein Zusammenhalt des Verbundkörpers durch Verklebung oder durch physikalische Kräfte. Auf diese Weise bildet vorteilig der Kern ein leichtes, stabiles Gerüst, das von Acrylglas umgeben oder eingehüllt ist. Das Kerngerüst, das auch als Füllung bezeichnet werden kann, depolymerisiert im Rahmen der Neuerung unter den Depolymerisationsbedingungen des Hüllenmaterials ebenfalls, da es aus einem Polymeren besteht, das entweder bei der Depolymerisation dasselbe Monomere oder dieselben Monomeren freisetzt, wie das Material der Hülle, oder zumindest Monomeres oder Monomere entstehen läßt, die von dem Monomeren oder den Monomeren des Hüllenmaterials mit vertretbarem Aufwand abtrennbar sind. D. h., daß bei der Abstimmung der für die Fertigung von Kern und Mantel zu verwendenden Acrylgläser, insbesondere darauf zu achten ist, daß entweder dasselbe Monomere von Kern und Mantel bei der Depolymerisation freigesetzt wird oder daß Monomere freigesetzt werden, die einen genügend großen Unterschied hinsichtlich physikalischen Eigenschaften wie Siedepunkt, Lösevermögen, Löslichkeit, etc. aufweisen. Hierbei bedeutet genügend großer Unterschied ein für ein technisches Aufarbeitungsverfahren ausreichender Eigenschaftsunterschied. Insbesondere bedeutet dies, daß bei der Wiederaufarbeitung von gebrauchten Verbundkörpern ein Trennen von Kern und Hülle entfallen kann, weil der Kern beim Recycling des die Hülle ausbildenden Acrylglases nicht stört und ggf. selbst als Wertstoff wiedergewonnen werden kann. Nach entsprechendem Vorbereiten von Altplatten oder -fronten beispielsweise durch Shreddern oder Zerkleinern in geeigneten Mühlen oder ggfls. auch gänzlich unzerkleinert können die neuerungsgemäßen Verbundkörper einem standardmäßigen Recyclingverfahren für Acrylglas unterworfen werden. Hierbei depolymerisieren das Acrylglas des Mantels und dasjenige der Füllung zum Monomeren und werden durch Extraktion, Destillation und/oder Rektfikation ohne jeglichen Qualitätsverlust wiedergewonnen.

Der Kern muß, wie bereits ausgeführt im wesentlichen zwei Eigenschaften aufweisen. Zum einen soll er wie die Hülle depolymerisieren, zum anderen muß er im Verhältnis zum massiven Acrylglas der Hülle spezifisch leichter sein.

Hierbei ist unter spezifisch leichter im Sinne der Neuerung zu verstehen, daß das Verhältnisse der Masse des gesamten vom Kern beanspruchten Raumes zum Volumen des Kerns geringer ist, als die Dichte der Hülle. Darüber hinaus ist es nicht von Belang, ob das Volumen des Kerns statistisch von Kernmasse erfüllt ist oder ob es eine bestimmte Verteilung der Massen im Kern gibt, allerdings mit der einen Einschränkung, daß eine ausreichende Stabilität des Kerns und damit des gesamten Verbundkörpers gewährleistet ist. Diese Randbedingungen sind jedoch vom Fachmann mit wenigen Versuchen optimierbar und insbesondere wird es der Fachmann verstehen, unter Berücksichtigung der angestrebten Richtwerte für die Materialien von Kern und Hülle in Abhängigkeit von der erwünschten Gewichtsersparnis im Vergleich zum massiven Acrylglas die Dicke der Hülle so zu wählen, daß in Abhängigkeit von der Stabilität des Kerns auch die Hülle ggfls. noch zur Stabilität des Verbundkörpers in nicht unerheblichem Maße beiträgt. Weitere Einschränkungen für das Kernmaterial bestehen im wesentlichen nicht.

Der Kern kann weiterhin aus einem einzigen oder auch selbst aus einer Mehrzahl von Materialien bestehen. Die Materialkombinationen selbst unterliegen keinen anderen Einschränkungen, als denjenigen, die oben aufgeführt sind bzw. denen das Hüllenmaterial unterliegt. Als Kernmaterial kommen daher alle als "Abstandhalter" zwischen den Hüllenseiten geeignete Materialien in Frage, bevorzugt sind jedoch solche Materialien, die eine hohe Stabilität mit entsprechender Gewichtsersparnis verbinden. Bewährt haben sich hierfür insbesondere die bekannten Hohlkammerplatten aus Acrylglas (EP-A 0 530 545), insbesondere die Doppelstegplatte.

Weiterhin können auch Acrylat- oder Methacrylatschäume als Kernmaterialien eingesetzt werden. Darüber hinaus kann auch durch Verwendung von granuliertem Material, das zusätzlich auch geschäumt sein kann, eine deutliche Dichtereduzierung des Kern erreicht werden.

Im folgenden wird nun die Neuerung unter Bezugnahme auf die beigefügten Figuren eingehender erläutert.

In den Figuren zeigen
- Figur 1:: einen Querschnitt durch eine erste Ausführungsform eines neuerungsgemäßen Verbundkörpers; und
- Figur 2:: einen Querschnitt durch eine weitere Ausführungsform eines neuerungsgemäßen Verbundkörpers.

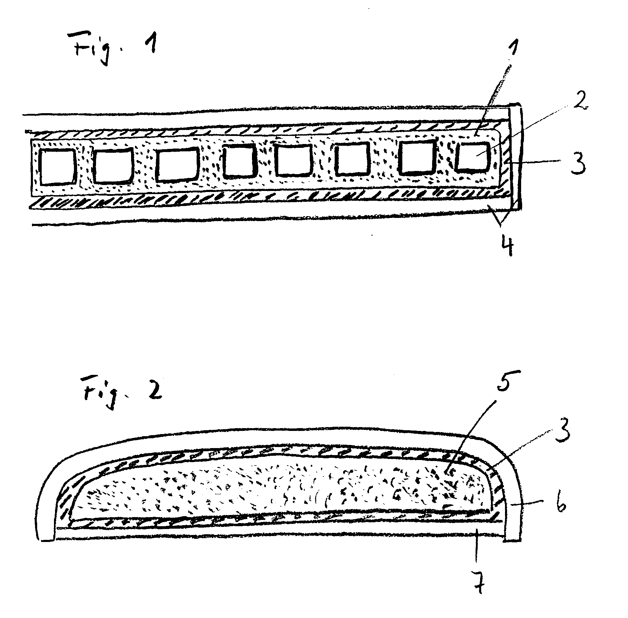

In Fig. 1 bezeichnet 1 eine Hohlkammerplatte aus Acrylglas. Die Platte 1 weist in ihrem Inneren hohle Kammern 2 auf. Die Herstellung solcher Platten 1 ist Stand der Technik. Auf den äußeren Oberflächen der Platte 1 sind Platten 4 ebenfalls aus Acrylglas angeordnet. Die Platten 4 sind mit der Hohlkammerplatte 1 durch eine Klebschicht 3 verbunden. Bevorzugt ist 3 ein Kleber auf Acrylatbasis.

Wie in Figur 1 zu sehen ist, kann der Kern, in diesem Fall also die Hohlkammerplatte 1, nur auf 3 Seiten von einem Mantel aus planen Acrylglasplatten 4 umgeben sein. Es kann aber auch genauso gut auch auf die in der Abbildung nicht beplankte Kante noch eine weitere plane Platte aufkaschiert werden. Die Platten 4 selbst können entweder aus gegossenem oder extrudiertem Acrylglas gefertigt sein.

In Fig. 2 besteht der Kern nicht aus einer Hohlkammerplatte sondern aus einem Schaummaterial auf Acrylatbasis 5. Der Verbundkörper gemäß Fig. 2 kann erhalten werden, indem eine tiefgezogene oder spritzgegossene Schale 6 aus Acrylglas mit dem Schaum 5 hinterfüttert wird. Die Hinterfütterung wird dann mit einer Platte 7 abgedeckt. Schale 6 und Platte 7 werden mit dem Schaum 5 durch Kleber 3, vorzugsweise Acrylatklebstoff, der besonders vorteilhaft die Depolymerisation nicht stört, verbunden.

Weitere Vorteile und Ausführungsformen der Neuerung werden aus den sich anschließenden Schutzansprüchen ersichtlich.

## Patentansprüche

1. Vollständig recyclierbarer Verbundkörper, insbesondere für Möbelplatten, mit einem Kern (1, 5) aus wenigstens einem ersten Material, der von einer Hülle (4, 6, 7) aus wenigstens einem zweiten Material umgeben ist, wobei der Kern (1, 5) spezifisch leichter ist als die Hülle (4, 6, 7),
**dadurch gekennzeichnet**,
- daß Hülle (4, 6, 7) und Kern (1, 5) aus Acrylglas sind und
- der Kern (1, 5) unter den Depolymerisationsbedingungen des Acrylglases der Hülle (4, 6, 7) dasselbe Monomer wie die Hülle (4, 6, 7) oder ein vom Monomer der Hülle (4, 6, 7) destillativ abtrennbares Monomeres freisetzt.

2. Verbundkörper nach Anspruch 1,
**dadurch gekennzeichnet**,
daß Kern- und Hüllenmaterial identisch sind, während die Hülle (4, 6, 7) mit einem Kleber (3) auf den Kern (1, 5) kaschiert ist.

3. Verbundkörper nach Anspruch 1 oder 2,
**dadurch gekennzeichnet**,
daß der Kern eine Hohlkammerplatte (1) ist.

4. Verbundkörper nach Anspruch 1 oder 2,
**dadurch gekennzeichnet**,
daß der Kern ein Schaum (5) aus einem (Meth)acrylat ist.

5. Verbundkörper nach Anspruch 1 oder 2,
**dadurch gekennzeichnet**,
daß der Kern ein Granulat, das gegebenenfalls auch geschäumt sein kann, aus einem (Meth)acrylat ist.
